# EUROPÄISCHE PATENTSCHRIFT

(11) **EP 4 107 099 B1**
(45) Veröffentlichungstag und Bekanntmachung des Hinweises auf die Patenterteilung: **17.09.2025**
(21) Anmeldenummer: 21704231.6
(22) Anmeldetag: 08.02.2021
(51) Int. Cl.: B65G 47/86

(54) **VORRICHTUNG UND VERFAHREN ZUM TRANSPORT VON BEHÄLTERN**
APPARATUS AND METHOD FOR TRANSPORTING CONTAINERS
DISPOSITIF ET PROCÉDÉ DE TRANSPORT DE CONTENANTS

(30) Priorität: 17.02.2020 DE 102020104033
(43) Veröffentlichungstag der Anmeldung: 28.12.2022
(73) Patentinhaber: KHS GmbH, 44143 Dortmund (DE)
(72) Erfinder: FAHLDIECK, Andreas, 55743 Idar-Oberstein (DE); SCHUG, Nils, 55499 Riesweiler (DE)
(86) Internationale Anmeldenummer: PCT/EP2021/052905
(87) Internationale Veröffentlichungsnummer: WO 2021/165072

(56) Entgegenhaltungen:
- DE-A1- 102008 037 101
- DE-A1- 102017 105 015
- US-A1- 2015 344 238
- US-A1- 2019 337 732

## Beschreibung

Die Erfindung betrifft eine Vorrichtung und ein Verfahren zum rotativen Transport von Behältern mit einer nicht rotierenden, ortsfesten Vorrichtungsbasis und einer um eine vertikale Achse rotierbaren Dreheinheit umfassend einen Zentralantrieb, der mindestens einen Motor zum Rotieren der rotierbaren Dreheinheit aufweist, welcher stufenlos bezüglich der Winkellage seiner Antriebswelle und Rotationsgeschwindigkeit steuer- und regelbar ist und hierzu mit einer entsprechenden Steuerung verbunden ist, sowie zwei übereinander angeordnete, um besagte Achse rotierende Trägerelemente jeweils eines Transportsterns und/oder einer Standplatte, wobei mindestens ein Trägerelement zur Anlage und/oder Ergreifen der Behälter ausgebildet ist. Weiterhin betrifft die Erfindung eine Behälterbehandlungsmaschine, insbesondere einen Füller, einen Etikettierer oder einen Verschließer. Schließlich betrifft die Erfindung ein Verfahren zur Höhenverstellung einer Vorrichtung zum Behältertransport.

Vorrichtungen und Verfahren zum Behältertransport von Behältern, insbesondere mittels eines Transportsterns, sind in vielfältiger Ausgestaltung aus dem Stand der Technik bekannt und werden dabei beispielsweise zum Transport von Lebensmittelbehältern, insbesondere Flaschen, bei deren Herstellung und Befüllung eingesetzt. Mittels jeweils an zwei übereinander angeordneten Trägerelementen festgelegten Greifern oder dergleichen kann jeder zu transportierende Behälter in einer Behältertasche auf zwei unterschiedlichen Höhen gegriffen werden, um einen verkippsicheren Transport des Behälters zu gewährleisten. Je nach Behältertyp und -größe ist es jedoch notwendig, den horizontalen Abstand beider Trägerelemente und damit der Greifer einzustellen, um ein optimales Greifen des Behälters zu ermöglichen.

Aus dem Dokument EP 2 332 867 A1 ist bereits eine Vorrichtung zum Transportieren von Behältnissen mit einem Führungselement bekannt, welches das Behältnis in wenigstens einem Bereich von dessen Umfangswandung kontaktiert und das Behältnis auf einem vorgegebenen Pfad führt. Dabei weist die Vorrichtung eine Antriebseinrichtung, welche das Führungselement antreibt, um das Behältnis zu transportieren, und ein Bodenstützelement auf, welches das Behältnis zumindest zeitweise während des Transports an einem Bodenbereich des Behältnisses stützt. Um eine Anpassung an unterschiedliche Behältnisgrößen bzw. -höhen vornehmen zu können, ist das Bodenstützelement höhenverstellbar gebildet.

Ferner ist aus der Druckschrift DE 10 2017 105 015 A1 eine rotative Greif- und Transportvorrichtung zum Greifen und Transportieren von Behältern bekannt, umfassend eine Trägerplatte und eine Stellplatte, die um eine Rotationsachse der Vorrichtung rotierbar sind. Diese Vorrichtung weist mehrere Behältergreifeinrichtungen mit jeweils einem ersten Greifarmpaar, einem zweiten Greifarmpaar und mit einem Steuernocken als Öffnungs- oder Schließmittel der Greifarmpaare auf, wobei das erste Greifarmpaar an der Trägerplatte und das zweite Greifarmpaar an der Stellplatte schwenkbar befestigt sind, und wobei die Greifarmpaare der jeweiligen Behältergreifeinrichtung mittels deren Steuernockens von einer Greifstellung in eine Öffnungsstellung oder umgekehrt bewegbar sind. Außerdem ist vorgesehen, dass die Trägerplatte einen ersten Hohlkörper aufweist und die Stellplatte einen zweiten Hohlkörper aufweist, wobei die Stellplatte gegenüber der Trägerplatte entlang der Rotationsachse höhenverstellbar ist und wobei der erste und zweite Hohlkörper zur Rotationsachse der Vorrichtung koaxial angeordnet und bei einer Höhenverstellung der Stellplatte ineinander verschiebbar sind.

Die DE 10 2008 037 101 A1 offenbart eine Vorrichtung zur Höheneinstellung im Bereich eines um eine Rotorachse drehbaren Rotors einer Behälterhandhabungsmaschine. Der Rotor enthält einen Rotorantrieb und eine Höheneinstelleinrichtung zum Verändern des vertikalen Abstands zwischen zwei Handhabungselementen. Die Höheneinstelleinrichtung ist über eine Kupplung mit dem Rotorantrieb zur Höheneinstellung antreibbar verbunden.

Die aus dem Stand der Technik bekannten Vorrichtungen zum Transport von Behältern mit einer Höheneinstellung zur Anpassung an unterschiedliche Behältertypen und -größen weisen jedoch einen komplexen Aufbau auf und sind somit wartungsaufwändig sowie schwer zu reinigen. Zudem führt die aufwändige Konstruktion zu hohen Herstellungskosten und einer Anfälligkeit für Fehler, was wiederum die Betriebskosten erhöht.

Der Erfindung liegt daher die Aufgabe zu Grunde, eine Vorrichtung sowie ein entsprechendes Verfahren bereitzustellen, die in einfacher Weise eine Höheneinstellung zur Anpassung an unterschiedliche Behältertypen und -größen ermöglichen, wobei die Vorrichtung insbesondere kostengünstig herzustellen und zu betreiben, einfach zu warten sowie leicht zu reinigen sein soll.

Diese Aufgabe wird erfindungsgemäß durch eine Vorrichtung gemäß Anspruch 1, eine Behälterbehandlungsmaschine gemäß Anspruch 15 sowie ein Verfahren gemäß Anspruch 16 gelöst. Vorteilhafte Weiterbildungen der Erfindung sind in den abhängigen Ansprüchen angegeben.

Die erfindungsgemäße Vorrichtung zum rotativen Transport von Behältern mit einer nicht rotierenden, ortsfesten Vorrichtungsbasis und einer um eine vertikale Achse rotierbaren Dreheinheit weist zwei übereinander angeordnete, um eine gemeinsame, vertikale Achse rotierende Trägerelemente auf, um jeweils einen Transportstern und/oder eine Standplatte zu bilden, wobei mindestens ein Trägerelement zur Anlage und/oder Ergreifen der Behälter ausgebildet ist.

Zum Rotieren der rotierbaren Dreheinheit weist die Vorrichtung einen Zentralantrieb auf. Dieser kann z.B. ein Servomotor oder ein elektromagnetischer Direktantrieb sein. Insbesondere ist dieser Zentralantrieb stufenlos bezüglich der Winkellage seiner Antriebswelle und Rotationsgeschwindigkeit steuer- und regelbar. Bei einer alternativen Ausführungsform kann der Zentralantrieb auch aus zwei oder mehr kleineren, zusammenwirkenden Antrieben gebildet sein. Der eine oder die Mehrzahl von kleineren Antrieben können direkt oder über ein Getriebe treibend auf den Rotor einwirken.

Erfindungsgemäß sind zwischen den Trägerelementen mehrere Spindeltriebe mit jeweils einer Gewindespindel und einer Spindelmutter zur Höhenverstellung des einen Trägerelements gegenüber dem anderen Trägerelement angeordnet, wobei an jeder Gewindespindel ein Zahnrad angeordnet ist, das zugleich im Eingriff mit einem oder zwei in Bezug zur Achse radial innen und außen am Zahnrad angeordneten Zahnkränzen ist. Der eine oder die beiden Zahnkränze ist/sind weiterhin erfindungsgemäß gegenüber den Trägerelementen rotierbar angeordnet und kann/können einzeln jeweils mittels einer an der Vorrichtungsbasis festgelegten Haltevorrichtung gehalten werden, sodass keine Rotation gemeinsam mit den Trägerelementen erfolgt und das Zahnrad an dem festgehaltenen Zahnkranz abrollen kann, um eine Höhenverstellung mittels des Spindeltriebs zu erreichen.

Das erfindungsgemäße Verfahren zur Höhenverstellung einer Vorrichtung zum Behältertransport, insbesondere einer erfindungsgemäßen Vorrichtung zum Behältertransport, sieht wenigstens drei, alternativ zueinander wählbare Betriebszustände vor.

In einem ersten Betriebszustand zum Transport von Behältern sowie zum Betrieb der Vorrichtung ohne Höhenverstellung werden alle Zahnkränze, die mit einem Zahnrad eines zwischen den Trägerelementen angeordneten Spindeltriebs zur Höhenverstellung zusammenwirken, ungehindert mit den Trägerelementen mitlaufen gelassen, sodass keine Drehung des einen Zahnkranzes bzw. der beiden Zahnkränze auf das Zahnrad übertragen wird sowie entsprechend der Spindeltrieb ruht und folglich keine Verstellung der Höhe bzw. des Abstandes beider Trägerelemente stattfindet.

In einem zweiten Betriebszustand zur Höhenverstellung in eine erste Verstellrichtung, beispielsweise zur Vergrößerung des Abstandes zwischen den Trägerelementen, wird der eine Zahnkranz bzw. einer der beiden Zahnkränze mittels einer Haltevorrichtung bei rotierenden Trägerelementen rotationsicher festgelegt, wodurch durch die Relativbewegung der mit den Trägerelementen mitrotierenden Zahnräder gegenüber dem festgelegten Zahnkranz eine Rotation in eine erste Drehrichtung auf den jeweiligen Spindeltrieb übertragen wird und es somit zu einer Höhenverstellung in die erste Verstellrichtung kommt.

In einem dritten Betriebszustand zur Höhenverstellung in eine der ersten Verstellrichtung entgegengesetzte zweite Verstellrichtung, beispielsweise zur Verringerung des Abstandes zwischen den Trägerelementen, wird - im Falle einer Ausgestaltung der Vorrichtung mit nur einem Zahnkranz - der eine Zahnkranz mittels der Haltevorrichtung rotationsicher festgelegt, wodurch das Zahnrad in eine zweite Drehrichtung rotierend an dem einen Zahnkranz abläuft und es zu einer Höhenverstellung in die zweite Verstellrichtung kommt. Die beiden Trägerelemente rotieren dabei - bezogen auf deren Rotationsrichtung beim zweiten Betriebszustand - in die entgegensetzte Richtung.

Im Falle einer Ausgestaltung der Vorrichtung mit zwei Zahnkränzen wird im dritten Betriebszustand anstelle des beim zweiten Betriebszustand festgehaltenen Zahnrads der andere Zahnkranz mittels der Haltevorrichtung rotationsicher festgelegt, wodurch das Zahnrad in der zweiten Drehrichtung rotierend am festgelegten Zahnkranz abläuft und es zu einer Höhenverstellung in die zweite Verstellrichtung kommt. Die beiden Trägerelemente rotieren dabei - bezogen auf deren Rotationsrichtung beim zweiten Betriebszustand - in die gleiche Richtung. Somit ist - im Falle einer Ausgestaltung der Vorrichtung mit zwei Zahnkränzen - also eine Höhenverstellung möglich, ohne dass die Drehrichtung der Trägerelemente bzw. der daraus gebildeten Transportsterne geändert werden muss, was insbesondere bei Anlagen vorteilhaft ist, die nur eine vorgesehene Laufrichtung haben bzw. aufgrund des Aufbaus nur in eine Richtung rotierbar sind.

Durch ihr raffiniertes Prinzip und den daraus resultierenden sehr einfachen Aufbau ermöglicht die erfindungsgemäße Vorrichtung eine besonders kostengünstige Herstellung und einfache Wartung. Zudem weist die erfindungsgemäße Vorrichtung eine offene und einfache Bauweise auf und ist dadurch gut zu reinigen, was im lebensmittelverarbeitenden bzw. Lebensmittelverpackungen herstellenden Bereich besonders wichtig ist. Dabei ist eine Ausführung der Vorrichtung mit nur einem einzelnen Zahnkranz besonders vorteilhaft, da hier die Anzahl der beweglichen und zu reinigenden Teile besonders gering ist. Schließlich ermöglicht das erfindungsgemäße Verfahren in einfacher Weise eine Formatanpassung an unterschiedliche Behältertypen bzw. -größen, sodass die erfindungsgemäße Vorrichtung ohne lange Umbauzeiten für verschiedenste Behälter verwendbar ist. Weiterhin ist die Verwendung von Spindeltrieben besonders vorteilhaft, da einerseits in einfacher Weise eine kraftvolle und zugleich präzise Höhenverstellung erreicht wird und andererseits die Spindeltriebe selbsthemmend sind. Es kann somit nicht zu keiner unerwünschten Verstellung aufgrund entlang der Mittellängsachse der Gewindespindeln und/oder entlang der Achse der Trägerelemente wirkenden Kräfte kommen.

Unter einem Behältertransport wird vorliegend ein Transport der Behälter mittels einer rotierenden Vorrichtung, bevorzugt mittels wenigstens eines Transportsterns verstanden. Der Transport von Behältern ist dabei grundsätzlich ein Vorgang, bei dem ein Behälter von einer ersten, definierten Position zu einer zweiten, vorbestimmten Position bewegt wird. Bevorzugt ist während des gesamten Transports die Position des Behälters fest definiert, was beispielsweise durch eine im Wesentlichen durchgängige Führung des Behälters erreicht werden kann. Dabei erfolgt der Transport bevorzugt durchgängig im Kontakt mit einem Bauteil der Transportvorrichtung, insbesondere jeweils einem an einem der Trägerelemente festgelegten Greifer.

Unter Transport versteht sich insbesondere der Transfer von oder zu einer Bearbeitungsstation oder zwischen zwei Bearbeitungsstationen. Dabei ist der Transportstern bevorzugt zum Transport durch eine Füllanlage für Behälter, insbesondere Flaschen, und/oder zum Halten der Behälter in einem ebenfalls rotierenden Maschinenteil wie einem Füller, einem Verschließer, einem Etikettierer oder dergleichen vorgesehen. Weiterhin bevorzugt ist der Transportstern zum Halten und Transportieren von leeren und/oder gefüllten Behältern, bevorzugt Flaschen und besonders bevorzugt Glasflaschen, gebildet.

Ein Transportstern ist grundsätzlich ein sternförmiger und/oder runder Körper mit Taschen zur Aufnahme jeweils eines Behälters, der zum Transport der Behälter vorgesehen ist. Dabei kann ein Transportstern im Sinne der Erfindung grundsätzlich jede Transportvorrichtung sein, die wenigstens abschnittsweise, bevorzugt vollständig durch Rotation mehrere Behälter transportieren kann. Dabei kann der Transportstern auch ein Transportkreisel oder eine anderweitige, rotierende Transportvorrichtung sein. Besonders bevorzugt wird der zu transportierende Behälter von dem Transportstern erfasst, wobei sich ganz besonders bevorzugt die Position des Behälters wenigstens in der Transportrichtung in Bezug zum Transportstern während des gesamten Transports nicht verändert. Neben dem Transport des Behälters kann der Transportstern noch weitere Funktionen erfüllen und/oder es können Bearbeitungsvorrichtungen für den Behälter am Transportstern festgelegt sein.

Behälter im Sinne der Erfindung sind zunächst alle Gegenstände, die im Inneren einen Hohlraum aufweisen und dazu gebildet sind, diesen Hohlraum von der Umgebung abzutrennen. Bevorzugt weisen alle zu transportierenden Behälter eine zueinander identische Form auf und/oder sind aus einem gleichen Material gebildet. Bei den Behältern kann es sich beispielsweise um Behälter zur Aufbewahrung von Lebensmitteln und/oder von flüssigen, viskosen oder pastösen Substanzen handeln. Bevorzugt sind die Behälter Dosen, Flaschen, Tuben, Kartonverpackungen oder dergleichen. Besonders bevorzugt sind die Behälter formstabil bzw. formsteif. Grundsätzlich können die Behälter aus einem beliebigen Material oder aus einer Kombination beliebiger Materialien gebildet sein. Bevorzugt sind die Behälter aus Kunststoff, insbesondere Polyethylenterephthalat (PET) oder Polyethylen (PE), aus Glas oder aus Metall, insbesondere Weißblech oder Aluminium, gebildet. Ganz besonders bevorzugt sind die Behälter Getränkeflaschen aus Glas oder Kunststoff.

Ein Trägerelement kann beispielsweise der Teil eines Transportsterns, an dem die Vorrichtungen zum Greifen und/oder zum Halten der Behälter angeordnet sind und/oder der das Grundgerüst eines Transportsterns oder eines Teils davon bildet, sein. Alternativ kann ein Trägerelement ein Teil einer Standplatte zum Abstützen eines Teils eines stehenden Behälters, insbesondere des Behälterbodens, sein. Das Trägerelement kann aus beliebig vielen Teilen gebildet sein und beliebige weitere Funktionen aufweisen. Bevorzugt ist das Trägerelement unmittelbar an einer Achse des Transportsterns bzw. der erfindungsgemäßen Vorrichtung angeordnet oder bildet mit einem Abschnitt im Mittelpunkt des Trägerelements die Achse. Ebenfalls bevorzugt ist das Trägerelement rotationssymmetrisch gebildet.

Erfindungsgemäß sind die beiden Trägerelemente übereinander und um eine gemeinsame Achse rotierend angeordnet. Bevorzugt weisen beide Trägerelemente der Vorrichtung zum Behältertransport den gleichen Durchmesser und/oder eine gleiche Teilung in Taschen zur Aufnahme jeweils eines Behälters auf. Besonders bevorzugt sind an wenigstens einem, insbesondere bevorzugt an beiden Trägerelementen Taschen und/oder Halterungen für jeweils eine Greif- / Halte-/Führungseinrichtung, insbesondere einen Greifer bzw. Flaschengreifer oder eine Halte- bzw. Bodenplatte, angeordnet, die ganz besonders bevorzugt zueinander identisch sind. Ebenfalls bevorzugt sind beide Trägerelemente parallel zueinander und/oder deckungsgleich entlang der Achse in der Höhe verschoben angeordnet.

Erfindungsgemäß ist die Vorrichtung zum Behältertransport derart ausgebildet, dass das untere Trägerelement höhenverstellbar ist und das obere Trägerelement in der Höhe feststehend bzw. nicht verstellbar ist.

Bei einer möglichen Ausführungsform der Erfindung ist der Zentralantrieb nur in einer einzigen Drehrichtung betreibbar. In diesem Fall sind bei der Vorrichtung vorteilhafterweise zwei Zahnkränze, nämlich ein radial innerer und ein radial äußerer Zahnkranz, vorgesehen. Alternativ kann der Zentralantrieb sowohl in einer ersten Drehrichtung als auch in einer der ersten Drehrichtung entgegengesetzten zweiten Drehrichtung betreibbar sein. Letzteres ist vorzugsweise der Fall, wenn bei der Vorrichtung nur ein einziger Zahnkranz vorgesehen ist.

Erfindungsgemäß erfolgt die Höhenverstellung der beiden Trägerelemente mittels mehrerer Spindeltriebe, die jeweils aus einer mit einer Spindelmutter zusammenwirkenden Gewindespindel gebildet sind. Grundsätzlich sind zwei Spindeltriebe ausreichend, wobei jedoch bevorzugt wenigstens drei Spindeltriebe zwischen den Trägerelementen angeordnet sind. Die Gewindespindeln können dabei aus einem beliebigen Material gebildet sein und ein beliebiges Außengewinde aufweisen. Bevorzugt sind die Gewindespindeln aus Metall oder Kunststoff und besonders bevorzugt einstückig gebildet. Die Gewindespindeln sind bevorzugt einenends, insbesondere an dem unteren Trägerelement, abgestützt und wirken anderenends mit einer Spindelmutter zusammen, um das obere Trägerelement gegenüber dem unteren Trägerelement zu verschieben. Die Abstützung der Gewindespindel kann dabei im Bereich eines Endes oder aber mittels eines Abstützbereichs erfolgen, der auch an einer beliebigen Position entlang der Gewindespindel angeordnet sein kann.

Alle Gewindespindeln weisen weiterhin bevorzugt eine identische Gewindesteigung auf und sind besonders bevorzugt zueinander identisch gebildet. Obwohl die einzelnen Spindeltriebe beliebig an den Trägerelementen angeordnet sein können, sind alle Gewindespindeln bevorzugt zueinander parallel angeordnet und/oder gleichmäßig auf einem Teilkreis bzw. über den Umfang eines Trägerelements verteilt. Ebenfalls bevorzugt weisen alle Gewindespindeln einen identischen Abstand zum Mittelpunkt bzw. zu der Rotationsachse des Trägerelements auf. Die Spindelmutter kann eine an dem Trägerelement, insbesondere dem oberen Trägerelement festgelegte Mutter bzw. ein Element mit einem zum Außengewinde der Gewindespindel passenden Innengewinde sein. Bei einer Ausführungsform ist die Spindelmutter aber als eine Gewindebohrung in einem Trägerelement gebildet. Ebenfalls bevorzugt ist die Spindelmutter als an dem oberen Trägerelement festgelegte Spindellagerbuchse gebildet, insbesondere bei einer Ausführung der Erfindung mit nur einem Trägerelement, bei der die Gewindespindel statt an einem unteren Trägerelement an einem unteren Standplatte und/oder Abstützelement abgestützt sind.

Die Spindeltriebe sind zur Höhenverstellung der erfindungsgemäßen Vorrichtung zum Behältertransport, bevorzugt zur Anpassung an unterschiedliche Behälter, insbesondere Behälter unterschiedlicher Höhe, vorgesehen, wobei besonders bevorzugt alle zeitgleich mit dem Transportstern transportierten Behälter zueinander identisch sind. Die Höhenverstellbarkeit ermöglicht dabei insbesondere eine Einstellung der Höhenlage von an den Trägerelementen jeweils angeordneten Greifern jeweils zum Greifen eines einzelnen Behälters, wobei jeder Behälter bevorzugt zugleich von einem Greifer des unteren Trägerelements und einem Greifer des oberen Trägerelements gegriffen wird. Die Höhenverstellbarkeit ermöglicht es dabei insbesondere, den oberen Greifer in eine Position des zu greifenden Behälters zu bringen, in der der Behälter sicher gegriffen werden kann. Die Höhenverstellung erfolgt dabei insbesondere vorteilhaft mittels des Antriebs des Transportsterns, sodass hierfür kein separater Antrieb notwendig ist.

Das einenends an der Gewindespindel vorgesehene Zahnrad kann als separates Bauteil daran angeordnet oder einstückig mit der Gewindespindel gebildet sein. Dabei kann das Zahnrad sowohl unmittelbar am Ende der Gewindespindel oder aber lediglich neben dem ein Außengewinde aufweisenden Bereich der Gewindespindel angeordnet sein. Auch kann das Zahnrad aus einem beliebigen Material gebildet sein, wobei das Zahnrad insbesondere aus Metall, einem Kunststoff oder einem Kunststoff mit Additiven gebildet ist. Weiterhin kann die Verzahnung des Zahnrades beliebig, beispielsweise gerade- oder schrägverzahnt, gebildet sein. Bevorzugt sind alle Zahnräder identisch zueinander gebildet. Schließlich ist das Zahnrad jeder der Gewindespindel bevorzugt in Bezug zu einer Rotationsachse der Vorrichtung zum Behältertransport auf der gleichen Höhe und/oder auf einer dem oberen Trägerelement gegenüberliegenden Seite des unteren Trägerelements angeordnet.

Erfindungsgemäß sind die Verzahnungen des Zahnrades und des Zahnkranzes bzw. der Zahnkränze aufeinander abgestimmt. Ansonsten kann der Zahnkranz bzw. jeder der beiden Zahnkränze zunächst beliebig gebildet sein. Bevorzugt ist der jeweilige Zahnkranz aus Metall gebildet, beispielsweise kostengünstig gelasert oder wasserstrahlgeschnitten, und/oder weist eine rotationssymmetrische Form auf. Bei einer Ausgestaltung der Vorrichtung mit nur einem Zahnkranz sind zwei alternative Ausführungsformen möglich, nämlich eine erste Ausführungsform mit nur einem inneren Zahnkranz und zweite Ausführungsform mit nur einem äußeren Zahnkranz. Diese beiden Ausführungsformen sind grundsätzlich als gleichwertig anzusehen, wobei je nach spezifischer Anwendung eine dieser beiden Ausführungen vorteilhaft sein kann.

Grundsätzlich wirkt jedes Zahnrad formschlüssig über seine Verzahnung mit dem einen Zahnkranz bzw. den beiden Zahnkränzen zusammen, wobei sich das Zahnrad bevorzugt an sich gegenüberliegenden Seiten der Verzahnung jeweils im Eingriff mit einem der Zahnkränze befindet. Entsprechend weist der eine Zahnkranz bevorzugt einen größeren Radius an der Innenseite als der Abstand des Zahnrades von der Achse der Trägerelemente und/oder der andere Zahnkranz einen kleineren Radius an der Außenseite als der Abstand des Zahnrades von der Achse der Trägerelemente auf, um jeweils mit dem Zahnrad im Eingriff abrollen zu können.

Da erfindungsgemäß der eine oder die beiden Zahnkränze mittels der Haltevorrichtung ortsfest und von der Rotation der Trägerelemente unabhängig gehalten werden können, muss der jeweilige Zahnkranz gegenüber den Trägerelementen rotierbar gelagert sein. Dabei sind - im Falle einer Ausgestaltung mit zwei Zahnkränzen - die beiden Zahnkränze bevorzugt auch unabhängig voneinander rotierbar. Dies kann in beliebiger Weise, beispielsweise mittels eines Gleit- oder Kugellagers realisiert werden. Bevorzugt ist der jeweilige Zahnkranz an einer jeweils unter- und oberhalb des Zahnkranzes angeordneten Platte bzw. einem Lagerelement als eine Art Bordscheibe abgestützt und axial gelagert. Die radiale Lagerung erfolgt bevorzugt durch die Verzahnung. Um jedoch den jeweiligen Zahnkranz unabhängig von der Rotation der Trägerelemente festlegen zu können, ist jede der beiden Haltevorrichtungen ortsfest festgelegt, d.h., an einem nicht rotierenden Teil der Vorrichtung zum Behältertransport angeordnet.

Bevorzugt sind beide Zahnkränze einzeln mittels jeweils einer Haltevorrichtung ansteuerbar bzw. festlegbar, wobei auch denkbar ist, dass für beide Zahnkränze eine einzige Haltevorrichtung vorgesehen ist, mittels der wahlweise einer von beiden Zahnkränzen festgelegt werden kann, wobei auch beide Zahnkränze zugleich freigebbar sein müssen, sodass diese gemeinsam mit den Trägerelementen rotieren können. Entsprechend werden im regulären Betrieb ohne eine im Eingriff befindliche Haltevorrichtung die beiden Zahnkränze von den Zahnrädern der Spindeltriebe mitgenommen, d.h., die jeweils mit beiden Zahnkränzen in Eingriff befindlichen Zahnräder, ggf. zusammen mit Dauermagneten, erzwingen die Rotation der Zahnkränze mit den Trägerelementen.

Bei einer bevorzugten Ausgestaltung der erfindungsgemäßen Vorrichtung zum Behältertransport ist der eine Zahnkranz bzw. sind beide Zahnkränze koaxial zu wenigstens einem der Trägerelemente, insbesondere dem unteren Trägerelement, besonders bevorzugt zu beiden Trägerelementen angeordnet, wodurch in vorteilhafter Weise eine Höhenverstellung an einer beliebigen Position entlang des Umfangs um die Achse der mit den Gewindespindeln verbundenen Zahnräder möglich ist. Weiterhin bevorzugt sind auch die beiden Zahnkränze koaxial zueinander angeordnet, wobei der Wirk-Abstand der einander zugewandten Verzahnungen der Zahnkränze besonders bevorzugt dem Wirk-Durchmesser der Verzahnung des Zahnrades entspricht.

Gemäß einer vorteilhaften Weiterbildung der erfindungsgemäßen Vorrichtung zum Transport sind die Gewindespindeln einenends jeweils an dem unteren oder dem oberen Trägerelement abgestützt, wodurch in einfacher Weise mittels der Spindeltriebe das eine Trägerelement von dem anderen Trägerelement weggedrückt und darauf zu gezogen werden kann. Dazu ist die Gewindespindel besonders bevorzugt gegen ein Verschieben entlang der Mittellängsachse in wenigstens eine, ganz besonders bevorzugt beide Richtungen an einem der Trägerelemente, beispielsweise am unteren Trägerelement, gesichert.

Eine vorteilhafte Ausführung der erfindungsgemäßen Vorrichtung zum Behältertransport sieht vor, dass die Gewindespindeln einenends jeweils an einem mit den Trägerelementen mitrotierenden, bevorzugt an einer Antriebswelle der Trägerelemente festgelegten Abstützelement abgestützt sind, wodurch ebenfalls in einfacher Weise eine Höhenverstellbarkeit des einen Trägerelements gegenüber dem anderen Trägerelement erreicht wird. Bei einer solchen Ausführung kann die Gewindespindel z.B. das untere Trägerelement durchdringen, ohne an einer oder beiden Oberflächen des unteren Trägerelements abgestützt zu sein. Es ist jedoch auch möglich, dass die Gewindespindel zusätzlich an einer oder beiden Oberflächen des unteren Trägerelements abgestützt ist. Weiterhin kann für jede Gewindespindel ein einzelnes Abstützelement oder aber ein Abstützelement für alle Gewindespindeln der Vorrichtung vorgesehen sein. Bevorzugt durchdringt die Spindel das Abstützelement und ebenfalls bevorzugt sind die Zahnkränze im Bereich des Abstützelements, insbesondere einer von dem unteren Trägerelement abgewandten Oberfläche des Abstützelements angeordnet.

Nach einer vorteilhaften Weiterbildung der erfindungsgemäßen Vorrichtung zum Behältertransport ist der eine Zahnkranz bzw. jeder der beiden Zahnkränze antriebslos gebildet und frei gegenüber dem Trägerelement um die Achse der Trägerelemente rotierbar angeordnet, sodass diese mitrotieren und mittels der Haltevorrichtung festgelegt werden können. Im Gegensatz dazu rotiert ein festgelegter Zahnkranz dann nicht mehr mit dem Trägerelement mit, sondern ist ortsfest und rotationsfrei gehalten, insbesondere ausschließlich durch wenigstens eine Haltevorrichtung.

Besonders bevorzugt ist eine Ausführung der erfindungsgemäßen Vorrichtung zum Behältertransport bei der an oder in dem einen Zahnkranz oder wenigstens einem der beiden Zahnkränze Magnete oder magnetische Werkstoffe angeordnet sind, insbesondere in gleichmäßigen Abständen zueinander. Mithilfe der Magnete bzw. magnetischen Werkstoffe lässt sich ein Rasteffekt erzielen. Wenn zwei Zahnkränze vorgesehen sind und in oder an beiden Zahnkränzen Magnete bzw. magnetische Wirkstoffe angeordnet sind, kann insbesondere erreicht werden, dass eine Relativbewegung der beiden Zahnkränze zueinander gehemmt und ein Rasteffekt erreicht wird, wodurch in einfacher Weise ein ungewolltes Verdrehen der Gewindespindel aufgrund einer Relativbewegung beider Zahnkränze und einer damit einhergehenden Rotation des an der Gewindespindel festgelegten Zahnrades effektiv verhindert wird.

Bevorzugt weisen die Magnete bzw. magnetischen Werkstoffe auf den jeweils anderen Zahnkranz und/oder auf das Zahnrad. Die Magnete sind bevorzugt Dauermagnete. Weiterhin können die Magnete bzw. magnetischen Werkstoffe in den einen Zahnkranz oder die beiden Zahnkränze integriert sein und/oder auf oder in der Oberfläche des einen Zahnkranzes oder der beiden Zahnkränze festgelegt sein.

Besonders bevorzugt weist einer der Zahnkränze in regelmäßigen Abständen Magnete bzw. magnetische Regionen auf, während die Abstände der Magnete oder magnetischen Regionen des anderen Zahnkranzes besonders bevorzugt derart angepasst sind, dass sich jeweils Magnete bzw. magnetische Regionen beider Zahnkränze gegenüberliegen und sich gegenseitig anziehen. Ganz besonders bevorzugt ist pro Zahn eines der Zahnkränze ein Magnet bzw. eine magnetische Region angeordnet. Zudem ist denkbar, das Zahnrad aus einem magnetisierbaren Material zu bilden, sodass eine Wechselwirkung der Magnete beider Zahnkränze auch über das Zahnrad möglich ist.

Auch ist es möglich, die Anordnung von Magneten im Zahnrad und/oder im Abstützelement vorzusehen, wobei diese anziehend oder abstoßend wirken können, wodurch sich ebenfalls der vorstehend genannte und gewünschte Rasteffekt einstellt.

Eine Ausgestaltung der erfindungsgemäßen Vorrichtung ist bevorzugt, bei der die Erfassung und Steuerung der Höhenverstellung des Trägerelementes über die gesteuerte Rotation des Zentralantriebes, insbesondere über dessen Rotationsrichtung, vornehmbar ist. Dadurch ist die Höhenverstellung der Vorrichtung mit einem einzelnen Zahnkranz oder mit zwei Zahnkränzen in besonders einfacher Weise möglich.

Weiterhin ist eine Ausführung der erfindungsgemäßen Vorrichtung zum Behältertransport bevorzugt, bei der die Steuerung ein erhöhtes Drehmoment zum Überwinden der magnetischen Wechselwirkung bei einer Relativbewegung beider Zahnkränze zueinander bzw. des einen Zahnkranzes zu dem Zahnrad erfasst und dadurch die Änderung der Höheneinstellung des Spindeltriebs ermittelt. Der zwischen den beiden Zahnkränzen bzw. dem einen Zahnkranz und dem Zahnrad auftretende Rasteffekt bei sich gegenüberstehenden Magneten bzw. magnetischen Regionen führt bei einer Bewegung der Trägerelemente mit einem gehaltenen und daher feststehenden Zahnkranz zu einem erhöhten Drehmoment bzw. einem höheren Motorstrom zur Rotation der Trägerelemente, sodass über diese Stromspitzen Informationen zur Relativbewegung beider Zahnkränze zueinander bzw. dem einen Zahnkranz und dem Zahnrad und daraus, zumindest bei bekannter Ausgangsposition, Informationen zur Höhenlage des zweiten Trägerelements über dem ersten Trägerelement erhalten werden können. Dies hat den Vorteil, dass dafür kein weiterer Sensor bzw. keine weitere Messvorrichtung benötigt wird.

Alternativ oder ergänzend kann mindestens ein Näherungssensor vorgesehen sein, um zu erkennen, ob das Halten der Haltevorrichtung erfolgt ist, und davon unabhängig den Stern um einen bestimmten Winkel zu verdrehen, bis die gewünschte Höhenlage für das Ergreifen erreicht ist.

Alternativ oder ergänzend kann mittels eines Initiators die Ruhelage des Zahnkranzes erfasst werden, sodass zur genauen Höheneinstellung der Rotationswinkel des Zentralantriebs und damit die Gewindespindeldrehung des Spindeltriebs exakt gesteuert werden kann.

Zum Aktivieren der Haltevorrichtung und dabei insbesondere zu einer formschlüssigen Kupplung kann in vorteilhafter Weise auch ein vorhandener Initiator genutzt werden, um die Position einer Kupplungsstelle anzufahren. Als Beispiel einer Kupplung kann der Zahnkranz eine Bohrung aufweisen, in die ein ruhender Pneumatikzylinder einen Bolzen einfahren kann. Um ein unkontrolliertes Mitnehmen durch Reibung bei einem zu frühen Ausfahren und ein Gleiten auf dem Zahnkranz zu vermeiden, kann der Transportstern an eine bekannte, dafür vorgesehene Position gedreht werden. Alternativ oder zusätzlich kann der Initiator das Erreichen bzw. Vorliegen dieser Position bestätigen, sodass geprüft werden kann, ob der Zahnkranz immer noch an seiner bekannten Position ist und zwischenzeitlich nicht verdreht wurde. Auf diese Weise kann der Bolzen eingefahren werden, sodass dieser sicher die Bohrung trifft. Gibt er Initiator dagegen nicht das Signal, so wird der Stern solange verdreht, bis das Signal kommt und der Bolzen wieder sicher einfahren kann.

Obwohl grundsätzlich beliebig viele Spindeltriebe beliebig zwischen den beiden Trägerelementen angeordnet sein können, sind bevorzugt über den Umfang der Trägerelemente wenigstens drei, besonders bevorzugt zwischen drei und acht und ganz besonders bevorzugt zwischen drei und sechs Spindeltriebe in einem Abstand zueinander, insbesondere mit gleichem Abstand zueinander bzw. in gleichem Abstand zu den jeweils benachbarten Spindeltrieben verteilt, angeordnet, wodurch einerseits eine stabile Abstützung des oberen Trägerelements gegenüber dem unteren Trägerelement sowie eine kraftvolle Höhenverstellung erreicht wird, andererseits jedoch der Aufbau nach wie vor einfach und damit kostengünstig ist.

Eine vorteilhafte Ausgestaltung der erfindungsgemäßen Vorrichtung zum Behältertransport sieht vor, dass die Haltevorrichtung mit mindestens einem am Zahnkranz angeordneten Halte- oder Anlageelement, bevorzugt einem von mehreren Schraubenköpfen, die besonders bevorzugt in gleichem Abstand zueinander über den Umfang des Zahnkranzes verteilt sind, formschlüssig in Eingriff gebracht werden kann, um ein Mitrotieren des jeweiligen Zahnkranzes mit den Trägerelementen zu stoppen. Zusätzlich kann die Haltevorrichtung mit den Halteelementen bzw. Schraubenköpfen auch kraftschlüssig zusammenwirken.

Bei einer vorteilhaften Weiterbildung der erfindungsgemäßen Vorrichtung zum Behältertransport weist die Haltevorrichtung eine Blattfeder auf, die auf eine den Zahnkranz nicht haltende Stellung vorgespannt ist und eine Halteöffnung für das Halteelement, insbesondere einen Schraubenkopf des Zahnkranzes, aufweist. Ebenfalls bevorzugt erfolgt die Ansteuerung der Haltevorrichtung, insbesondere der Blattfeder, zum Verstellen zwischen einer haltenden und einer den Zahnkranz freigebenden Position pneumatisch oder hydraulisch, insbesondere mittels zwei pneumatisch oder hydraulisch betriebenen Zylindern, die bevorzugt parallel zueinander angeordnet sind und jeweils mit einem die Blattfeder verschwenkenden bzw. verbiegenden Hebel verbunden sind, sodass durch die Betätigung zunächst des einen Zylinders und nachfolgend des zweiten Zylinders der Hebel zumindest in zwei Stufen in eine die Blattfeder haltende Position bringen kann. Alternativ können in diese Zylinder auch ohne Umweg über die Blattfeder einen Bolzen oder ein vergleichbares Element zum Halten einfahren. Bei der Ausführung mit nur einem Zahnkranz, bei der die Behältertransportvorrichtung zum Verstellen in beide Richtungen verdreht werden kann, wird vorteilhafterweise nur ein Zylinder benötigt.

Weiterhin bevorzugt kann die Haltevorrichtung einen Arretierriegel aufweisen, der zwischen einer den einen Zahnkranz bzw. einen von beiden Zahnkränzen sperrenden Stellung und einer den einen Zahnkranz bzw. beide Zahnkränze freigebenden Stellung verstellbar ist. Dazu kann der Arretierriegel mechanisch, pneumatisch und/oder elektromagnetisch verstellbar sein. Besonders bevorzugt ist der Arretierriegel bzw. die Haltevorrichtung gegenüber der stehenden bzw. nicht mitrotierenden Vorrichtungsbasis festgelegt. Ganz besonders bevorzugt ist der Arretierriegel derart verschieblich angeordnet, dass ein Teil des Arrtierriegels durchgängig gegenüber der Vorrichtungsbasis festgelegt ist und ein anderer Teil wahlweise mit dem einen Zahnkranz bzw. einem der beiden Zahnkränze in Eingriff, insbesondere in einen mechanischen, formschlüssigen Eingriff, gebracht werden kann. Dabei ist insbesondere bevorzugt der in mechanischen Eingriff bringbare Teil des Arretierriegels ein Bolzen, der mit Schraubenköpfen an dem Zahnkranz oder mit an dem Zahnkranz angeordneten Bohrungen zusammenwirken kann. Nachfolgend werden die Begriffe Arretierriegel und Verriegelung synonym verwendet, wenn nicht ausdrücklich etwas andere ausgeführt wird.

Alternativ oder zusätzlich kann die Arretierung auch elektromagnetisch erfolgen, wozu der an dem Zahnkranz angrenzend anordenbare oder damit in Kontakt bringbare Teil des Arretierriegels zusätzlich einen Elektromagneten aufweist, der zum Arretieren aktivierbar ist und dann bevorzugt mit einem magnetisierbaren Teil des Zahnkranzes und besonders bevorzugt mit in diesem Bereich des Zahnkranzes festgelegten Permanentmagneten wechselwirkt.

Weiterhin ist auch denkbar, dass die Arretiervorrichtung aus zwei oder mehr Elektromagneten gebildet wird oder diese umfasst, wobei jedem Zahnkranz ein Elektromagnet zugeordnet ist. Diese sind bei einer Ausgestaltung der Vorrichtung mit zwei Zahnkränzen besonders bevorzugt wechselweise aktivierbar, um wahlweise einen der beiden Zahnkränze festzulegen. Sind die Elektromagnete deaktiviert, so kann der eine Zahnkranz bzw. können die beiden Zahnkränze frei rotieren und es erfolgt keine Verstellung der Spindeltriebe. Weiterhin besonders bevorzugt ist der den Elektromagneten aufweisende Teil des Arretierriegels bzw. der Arretiervorrichtung weg von der Zahnkranzoberfläche vorgespannt und/oder kann magnetisch gegen diese Vorspannung an die Zahnkranzoberfläche gezogen werden. Hierzu kann der jeweilige Zahnkranz magnetisch sein oder Permanentmagnete aufweisen, insbesondere eingelegte Permanentmagnete.

Bei einer bevorzugten Ausführungsform der Erfindung, ist vorgesehen, dass das untere Trägerelement mehrere Behältertaschen mit jeweils einer Behälterabstützfläche, insbesondere einer kegelstumpfartigen Behälterabstützfläche, aufweist. Erfindungsgemäß weist das obere Trägerelement mehrere Halteelemente zum Halten der Behälter an deren Neckring auf.

Bei einer bevorzugten Weiterbildung des erfindungsgemäßen Verfahrens erfolgt die Erfassung der Höheninformation des Abstandes beider Trägerelemente voneinander bzw. des einen, insbesondere oberen Trägerelements gegenüber der Vorrichtungsbasis über den Weg des Stellmotors zur Rotation der rotierbaren Dreheinheit bei zugleich einem gehaltenen Zahnkranz, da die Rotationsbewegung des Stellmotors in einem linearen Verhältnis zu Höhenänderung des einen Trägerelements über die Spindel steht.

Ausführungsbeispiele der erfindungsgemäßen Vorrichtung werden nachstehend mit Bezug auf die Zeichnungen näher erläutert. Es zeigen:
- Fig. 1: eine Schnittansicht eines Teils einer Vorrichtung zum Behältertransport mit einer Höhenverstellung eines oberen Trägerelements gegenüber einem unteren Trägerelement mit einem einzelnen, äußeren Zahnkranz,
- Fig. 2: eine Schnittansicht eines Teils einer Vorrichtung zum Behältertransport mit einer Höhenverstellung eines oberen Trägerelements gegenüber einem unteren Trägerelement mit einem inneren sowie einem äußeren Zahnkranz,
- Fig. 3: eine perspektivische Ansicht eines Teils der in Fig. 2 dargestellten Vorrichtung zum Behältertransport,
- Fig. 4: eine weitere mögliche Ausführung einer Arretierung für die Vorrichtung nach einer der Figuren 1 - 3, und
- Fig. 5: eine weitere mögliche Ausführung einer Arretierung für die Vorrichtung nach einer der Figuren 1 - 3.

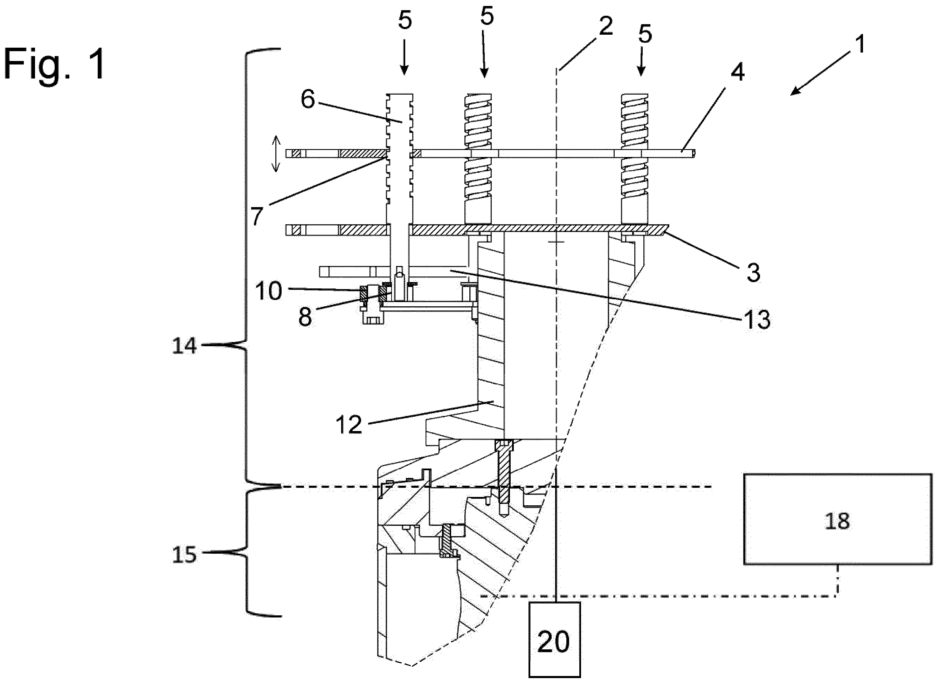

In Fig. 1 ist eine Vorrichtung 1 zum stehenden Transport von Flaschen, insbesondere während des Befüllens mit einem Getränk oder während des Etikettierens oder während des Verschließens, schematisch dargestellt. Die Vorrichtung 1 umfasst zwei um eine vertikale Achse 2 rotierbare Trägerelemente 3, 4, die in der Höhe zueinander versetzt bzw. übereinander angeordnet sind. Beide Trägerelemente 3, 4 sind identisch zueinander gebildet und weisen jeweils Halterungen zur Aufnahme eines Greifers oder Taschen zur Aufnahme der Behälter auf. Jede mittels der Vorrichtung 1 zu transportierende Flasche kann somit in einem unteren Bereich sowie einem darüberliegenden Bereich jeweils von einem an einem der beiden Trägerelemente 3, 4 angeordneten Greifer oder Tasche gehalten werden.

Dabei weist die Vorrichtung 1 eine ortsfeste und nicht rotierende Vorrichtungsbasis 15 auf, an der eine die beiden Trägerelemente 3, 4 umfassende Dreheinheit 14 rotierbar um die Achse 2 festgelegt ist (siehe Fig. 1).

Das obere Trägerelement 4 ist gegenüber dem unteren Trägerelement 3 in der Höhe verstellbar, um die Position von an den Trägerelementen 3, 4 angeordneten Greifern oder Taschen an die Höhe der zu transportierenden Behälter anpassen zu können. Um diese Höhenverstellung zu ermöglichen, sind entlang des Umfangs der Trägerelemente 3, 4 in gleichem Abstand zueinander sowie zur Achse 2 mehrere Spindeltriebe 5 angeordnet.

Jeder der Spindeltriebe 5 ist aus einer Gewindespindel 6 und einer Spindelmutter 7 gebildet. Die Spindelmutter 7 wird durch eine Gewindebohrung oder eine eingelegte, verbundene Gewindemutter in dem oberen Trägerelement 4 gebildet, durch die ein oberer Teil der Gewindespindel 6 hindurch verläuft. Die Gewindespindel 6 weist einen Abschnitt mit einem an die Gewindebohrung in dem oberen Trägerelement 4 angepassten Außengewinde auf.

Das Ende dieses Abschnitts ist gegen die Oberfläche des unteren Trägerelements 3 abgestützt, welches auf das obere Trägerelement 4 zuweist. Ein dem Bereich mit dem Außengewinde folgender Bereich der Gewindespindel 6, der in der Regel einen geringeren Durchmesser aufweist, ist durch eine Öffnung des unteren Trägerelements 3 geführt und durchdringt weiterhin ein Abstützelement 13, das mit den Trägerelementen 3, 4 mitrotierend an einer Antriebswelle 12 festgelegt ist.

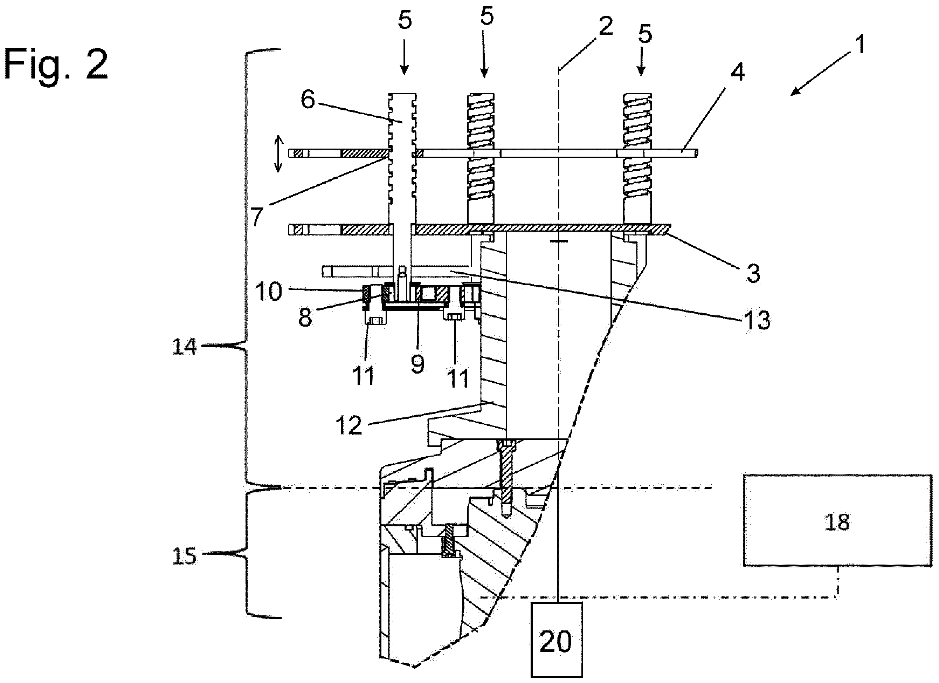

Auf der dem unteren Trägerelement 3 abgewandten Seite des Abstützelements 13 ist an der Gewindespindel 6 ein Zahnrad 8 angeordnet. Die Verzahnung des Zahnrades 8 befindet sich im Eingriff mit einer Verzahnung eines äußeren Zahnkranzes 10, sodass das Zahnrad 8 den Zahnkranz 10 radial abstützt. Der äußere Zahnkranz 10 liegt in Bezug zur Achse 2 radial außen am Zahnrad 8 an und ist konzentrisch zur Achse 2 angeordnet. Zudem kann der Zahnkranz 10 ebenfalls um diese Achse 2 rotieren, wobei der Zahnkranz 10 nicht an den Trägerelementen 3, 4 festgelegt und entsprechend davon unabhängig sowie frei rotierbar ist. Alternativ ist selbstverständlich auch eine beliebige Ausführung mit lediglich einem inneren Zahnkranz 9 als einzigem Zahnkranz möglich (vgl. Fig. 2 bis 5).

Im Normalbetrieb eines Transportes von stehenden Flaschen durch die Vorrichtung 1, rotieren somit die Trägerelemente 3, 4 und der Zahnkranz 10 synchron mit derselben Geschwindigkeit um die Achse 2, wobei die hiermit umlaufenden Spindeln 5 im Normalbetrieb nicht um ihre jeweils eigene Hochachse rotieren.

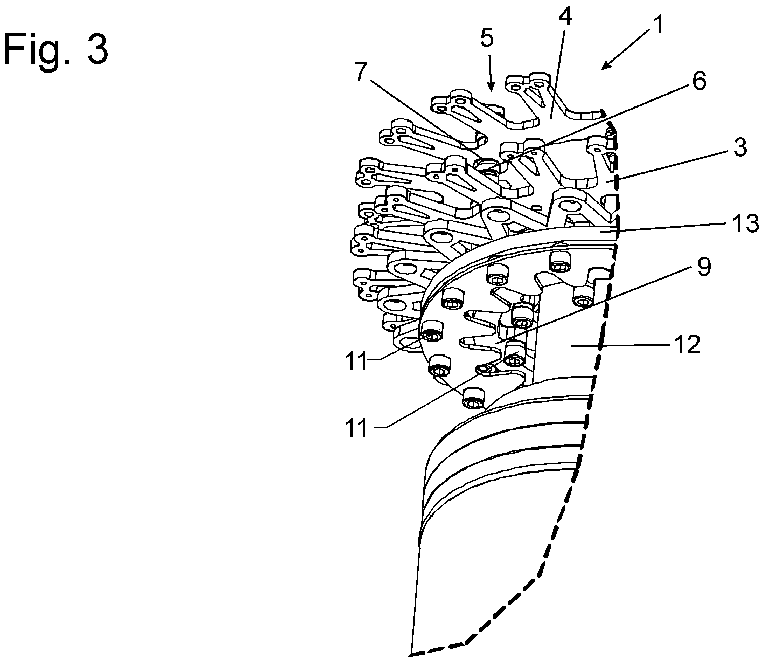

Eine weitere, in den Figuren 2 und 3 dargestellte Ausführung der Vorrichtung 1 unterscheidet sich von der zuvor dargestellten Ausführung maßgeblich dadurch, dass sich die Verzahnung des Zahnrades 8 nicht nur im Eingriff mit einer Verzahnung des äußeren Zahnkranzes 10, sondern zugleich auch im Eingriff mit einer Verzahnung eines inneren Zahnkranzes 9 befindet, sodass das Zahnrad 8 beide Zahnkränze 9, 10 radial abstützt. Der äußere Zahnkranz 10 liegt in Bezug zur Achse 2 radial außen am Zahnrad 8 an, während der innere Zahnkranz 9 an dem Zahnrad 8 an der gegenüberliegenden, radial innenliegenden Seite anliegt. Die beiden Zahnkränze 9, 10 sind jeweils konzentrisch zur Achse 2 angeordnet und können ebenfalls um diese Achse 2 rotieren, wobei die Zahnkränze 9, 10 nicht an den Trägerelementen 3, 4 festgelegt und entsprechend davon unabhängig sowie frei rotierbar sind.

Der bzw. die Zahnkränze 9, 10 weisen an der den Trägerelementen 3, 4 abgewandten Seite in regelmäßigen Abständen aus der Oberfläche der Zahnkränze 9, 10 herausstehende Befestigungselemente, insbesondere Schraubenköpfe 11 auf (siehe Fig. 3). Für den Zahnkranz 10 bzw. jeden der beiden Zahnkränze 9, 10 ist eine Haltevorrichtung 17 ortsfest an der Vorrichtungsbasis 15 und mit den Trägerelementen 3, 4 nicht mitrotierend angeordnet. In einer ersten, in den Figuren nicht dargestellten Ausführung umfasst die Haltevorrichtung 17 einen Arretierriegel in der Ausführung einer Blattfeder, die beispielsweise eine Aussparung oder eine Öffnung aufweist, mittels der einer oder mehrere der Schraubenköpfe 11 formschlüssig erfasst und somit einer der Zahnkränze 9, 10 rotationsstabil festgelegt werden kann, um eine Höhenverstellung des oberen Trägerelements 4 gegenüber dem unteren Trägerelement 3 mittels der Spindeltriebe 5 zu erreichen.

Im regulären Betrieb der Vorrichtung 1 durch den Zentralantrieb 20 rotiert der Zahnkranz 10 bzw. rotieren beide Zahnkränze 9, 10 frei mit den Trägerelementen 3, 4 mit, da das Zahnrad 8 jedes Spindeltriebs 5 mit dem bzw. beiden Zahnkränzen 9, 10 im Eingriff befindlich ist. Zur Höhenverstellung wird dann der eine Zahnkranz 10 bzw. einer der beiden Zahnkränze 9, 10 gegen eine weitere Rotation gesichert, sodass aufgrund der weiteren Drehung der Trägerelemente 3, 4 durch den Zentralantrieb 20 das jeweilige Zahnrad 8 auf dem festgelegten Zahnkranz 9, 10 abrollt und entsprechend den Spindelantrieb 5 betreibt. Der andere Zahnkranz 10, 9, soweit vorhanden, bleibt freigegeben, da dieser rotieren können muss, um das Zahnrad 8 nicht zu sperren.

Zur Höhenverstellung in die entgegengesetzte Richtung wird in analoger Weise der andere der beiden Zahnkränze 9, 10 festgelegt, während die Trägerelemente 3, 4 nach wie vor in die gleiche Richtung rotiert werden. Entsprechend ist mittels der Vorrichtung 1 eine Höhenverstellung des oberen Trägerelements 4 in beide Richtungen bei gleichbleibender Rotationsrichtung der Trägerelemente 3, 4 möglich.

Wenn nur ein einzelner Zahnkranz 9 oder 10 vorgesehen ist, kann eine Höhenverstellung in die entgegengesetzte Richtung auch durch eine zeitweilige Änderung der Antriebsrichtung des Zentralantriebs 20, zumindest für die Dauer des Verstellvorgangs, erreicht werden. Dabei ist es möglich, nur einen einzelnen inneren Zahnkranz 9 oder nur einen einzelnen äußeren Zahnkranz 10 zur Höhenverstellung vorzusehen.

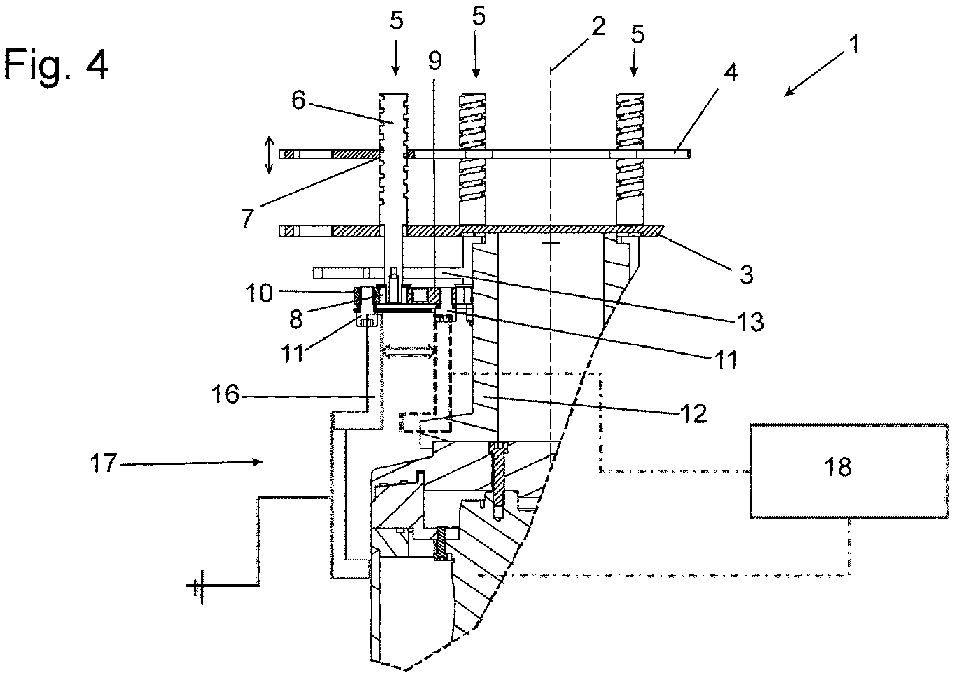

In Figur 4 ist eine weitere mögliche Ausführung einer Vorrichtung 1 zum Transport stehender Behälter dargestellt, die eine Haltevorrichtung 17 mit einer verschieblich angeordneten, mechanischen Verriegelung 16 aufweist. Der Arretierriegel bzw. die Verriegelung 16 ist als Sperrriegel gebildet, der mit einem Ende gegenüber der Vorrichtungsbasis festgelegt ist und am anderen Ende mit dem einen Zahnkranz 9, 10 bzw. jedem der beiden Zahnkränze 9, 10 in Eingriff gebracht werden kann. Dabei ist die Verriegelung 16 mittels einer Steuereinheit 18 zwischen drei Positionen verschieblich gelagert und verfahrbar, wobei in einer ersten äußeren Position der eine Zahnkranz 10 gegen eine Rotation mit der Dreheinheit 14 blockiert werden kann. In einer inneren Position kann mittels der Verriegelung 16 der andere Zahnkranz 9 rotationsfest festgelegt werden. Schließlich sind in einer mittleren Position der Verriegelung beide Zahnkränze 9, 10 freigegeben und können mit der Dreheinheit mitrotieren.

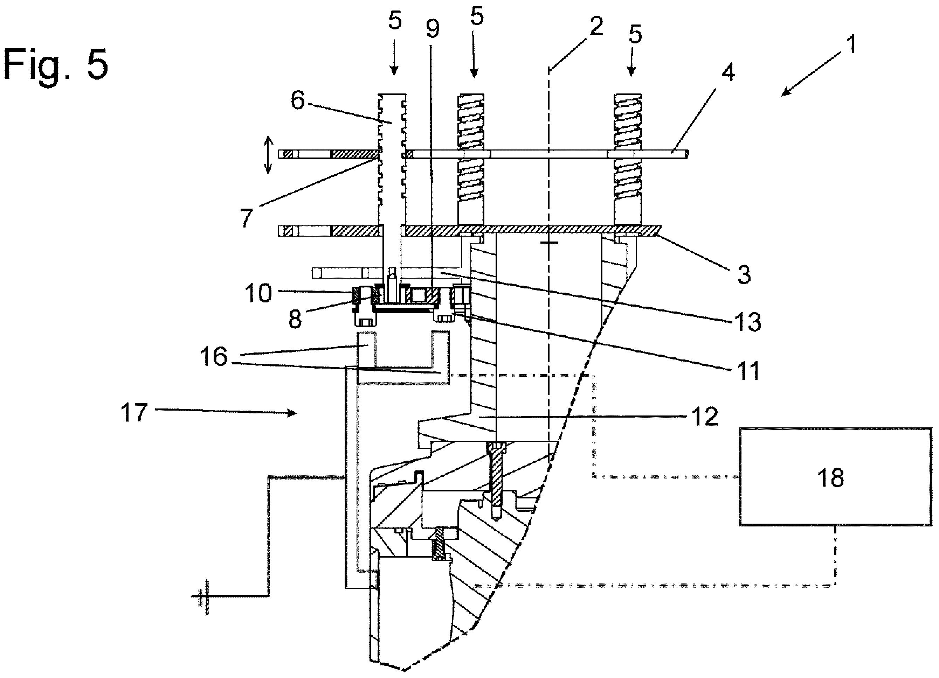

Bei einer in Figur 5 dargestellten, weiteren Ausführung einer Vorrichtung 1 zum Transport stehender Behälter umfasst die Haltevorrichtung 17 zwei jeweils den Zahnkränzen 9, 10 gegenüberliegend ortsfest angeordnete Verriegelungen 16, die als Elektromagnete gebildet und mit einer Steuerung 18 verbunden sind. Die Steuerung 18 kann die beiden Elektromagnete wahlweise aktivieren und deaktivieren.

### Bezugszeichenliste

- 1: Vorrichtung zum Behältertransport
- 2: Achse
- 3: unteres Trägerelement
- 4: oberes Trägerelement
- 5: Spindeltrieb
- 6: Gewindespindel
- 7: Spindelmutter
- 8: Zahnrad
- 9: innerer Zahnkranz
- 10: äußerer Zahnkranz
- 11: Schraubenkopf
- 12: Antriebswelle
- 13: Abstützelement
- 14: Dreheinheit
- 15: Vorrichtungsbasis
- 16: Verriegelung
- 17: Haltevorrichtung
- 18: Steuerung
- 20: Zentralantrieb

## Patentansprüche

1. Vorrichtung (1) zum rotativen Transport von Behältern, mit einer nicht rotierenden, ortsfesten Vorrichtungsbasis (15) und einer um eine vertikale Achse (2) rotierbaren Dreheinheit (14), umfassend:
- einen Zentralantrieb (20) aufweisend mindestens einen Motor zum Rotieren der rotierbaren Dreheinheit (14), welcher stufenlos bezüglich der Winkellage seiner Antriebswelle und Rotationsgeschwindigkeit steuer- und regelbar ist und hierzu mit einer entsprechenden Steuerung (18) verbunden ist,
- zwei übereinander angeordnete, um die besagte Achse (2) rotierende Trägerelemente (3, 4) jeweils eines Transportsterns und/oder einer Standplatte, wobei mindestens ein Trägerelement (3, 4) zur Anlage und/oder zum Ergreifen der Behälter ausgebildet ist,
**dadurch gekennzeichnet, dass**
- das untere Trägerelement (3) höhenverstellbar und das obere Trägerelement (4) in der Höhe feststehend gebildet ist, wobei
- das obere Trägerelement (4) mehrere Halteelemente zum Halten der Behälter an deren Neckring aufweist, und dass
- zwischen den Trägerelementen (3, 4) mehrere Spindeltriebe (5) mit jeweils einer Gewindespindel (6) und einer Spindelmutter (7) zur parallelen Höhenverstellung des einen Trägerelements (4) gegenüber dem anderen Trägerelement (3) angeordnet sind, wobei
- an jeder Gewindespindel (6) mindestens ein Zahnrad (8) angeordnet ist,
- das zugleich im Eingriff mit einem oder zwei in Bezug zur Achse (2) radial innen und/oder außen am Zahnrad (8) angeordneten Zahnkränzen (9, 10) ist, wobei
- der eine oder beide Zahnkränze (9, 10) relativ zu der Dreheinheit (14) und/oder den Trägerelementen (3, 4) rotierbar gelagert ist/sind und
- einzeln mittels jeweils einer an der Vorrichtungsbasis (15) festgelegten Haltevorrichtung (17) gehalten werden kann/können, sodass keine Rotation gemeinsam mit den Trägerelementen (3, 4) erfolgt und das Zahnrad (8) an dem rotationsfreien Zahnkranz (9, 10) abrollt.

2. Vorrichtung (1) zum Behältertransport nach Anspruch 1,
**dadurch gekennzeichnet, dass** der eine oder beide Zahnkränze (9, 10) koaxial zu wenigstens einem der Trägerelemente (3, 4) angeordnet ist/sind.

3. Vorrichtung (1) zum Behältertransport nach Anspruch 1 oder 2,
**dadurch gekennzeichnet, dass** die Gewindespindeln (6) an einem Ende jeweils an dem unteren Trägerelement (3) oder an dem oberen Trägerelement (4) gelagert sind.

4. Vorrichtung (1) zum Behältertransport nach einem der vorhergehenden Ansprüche,
**dadurch gekennzeichnet, dass** die Gewindespindeln (6) an einem Ende jeweils an einem mit den Trägerelementen (3, 4) mitrotierenden, an einer Antriebswelle (12) der Trägerelemente (3, 4) festgelegten Abstützelement (13) abgestützt sind.

5. Vorrichtung (1) zum Behältertransport nach einem der vorhergehenden Ansprüche,
**dadurch gekennzeichnet, dass** der eine oder beide Zahnkränze (9, 10) antriebslos gebildet und frei um die vertikale Achse (2) rotierbar angeordnet sind.

6. Vorrichtung (1) zum Behältertransport nach einem der vorhergehenden Ansprüche,
**dadurch gekennzeichnet, dass** an oder in dem einen Zahnkranz (9, 10) oder wenigstens einem der beiden Zahnkränze (9, 10) Magnete oder magnetische Werkstoffe angeordnet sind.

7. Vorrichtung (1) zum Behältertransport nach einem der vorhergehenden Ansprüche,
**dadurch gekennzeichnet, dass** in dem Zahnrad (8) mindestens ein Magnet vorhanden ist, welcher einen Rasteffekt bewirkt, insbesondere im Zusammenwirken mit dem Trägerelement (3) und/oder dem Abstützelement (13) und/oder dort angeordneten Magneten.

8. Vorrichtung (1) zum Behältertransport nach Anspruch 6 oder 7,
**dadurch gekennzeichnet, dass** die Steuerung (18) ein erhöhtes Drehmoment zum Überwinden der magnetischen Wechselwirkung bei einer Relativbewegung der beiden Zahnkränze (9, 10) zueinander und/oder des Zahnkranzes (9, 10) zu dem Zahnrad (8) erfasst und dadurch die Änderung der Höheneinstellung des Spindeltriebs (5) ermittelt.

9. Vorrichtung (1) zum Behältertransport nach einem der vorhergehenden Ansprüche,
**dadurch gekennzeichnet, dass** die Erfassung und Steuerung der Höhenverstellung des Trägerelementes (4) über die gesteuerte Rotation des Zentralantriebes (20) vornehmbar ist.

10. Vorrichtung (1) zum Behältertransport nach einem der vorhergehenden Ansprüche,
**dadurch gekennzeichnet, dass** über den Umfang der Trägerelemente (3, 4) zwischen drei und acht Spindeltriebe (5) mit Abstand zueinander angeordnet sind.

11. Vorrichtung (1) zum Behältertransport nach einem der vorhergehenden Ansprüche,
**dadurch gekennzeichnet, dass** die Haltevorrichtung (17) mit mindestens einem von mehreren Halte- oder Anlageelementen, wie Befestigungselementen, Bolzen oder Schraubenköpfen (11), die in gleichem Abstand zueinander über den Umfang des Zahnkranzes (9, 10) verteilt sind, kraft- oder formschlüssig in Eingriff gebracht werden kann.

12. Vorrichtung (1) zum Behältertransport nach einem der vorhergehenden Ansprüche,
**dadurch gekennzeichnet, dass** die Haltevorrichtung (17) eine Blattfeder aufweist, die auf eine den Zahnkranz (9, 10) nicht-haltende Stellung vorgespannt ist und eine Halteöffnung für einen Schraubenkopf (11) des Zahnkranzes (9, 10) aufweist.

13. Vorrichtung (1) zum Behältertransport nach Anspruch 12,
**dadurch gekennzeichnet, dass** die Ansteuerung der Blattfeder zum Verstellen zwischen einer haltenden und einer den Zahnkranz (9, 10) freigebenden Position pneumatisch erfolgt.

14. Vorrichtung (1) zum Behältertransport nach einem der vorhergehenden Ansprüche,
**dadurch gekennzeichnet, dass** das untere Trägerelement (3) mehrere Behältertaschen mit jeweils einer Behälterabstützfläche, insbesondere einer kegelstumpfartigen Behälterabstützfläche, aufweist.

15. Behälterbehandlungsmaschine, insbesondere Füller, Etikettierer oder Verschließer, mit einer Vorrichtung (1) zum Behältertransport nach einem der vorhergehenden Ansprüche.

16. Verfahren zur Höhenverstellung einer Vorrichtung (1) zum Behältertransport, insbesondere nach einem der vorhergehenden Ansprüche 1 - 14, wobei die Vorrichtung (1) zwei übereinander angeordnete, um eine gemeinsame Achse (2) rotierende Trägerelemente (3, 4) jeweils eines Transportsterns und/oder einer Standplatte aufweist, wobei das untere Trägerelement (3) höhenverstellbar und das obere Trägerelement (4) in der Höhe feststehend gebildet ist, wobei das obere Trägerelement (4) mehrere Halteelemente zum Halten der Behälter an deren Neckring aufweist, wobei
- zum Betrieb der Vorrichtung (1) ohne Höhenverstellung ein oder zwei mit einem Zahnrad (8) eines zwischen den Trägerelementen (3, 4) angeordneten Spindeltriebs (5) zur Höhenverstellung zusammenwirkende Zahnkränze (9, 10) ungehindert mit den Trägerelementen (3, 4) mitlaufen gelassen werden,
- zur Höhenverstellung in eine erste Verstellrichtung der eine Zahnkranz (9, 10) oder einer von beiden Zahnkränzen (9, 10) mittels einer Haltevorrichtung (17) bei rotierenden Trägerelementen (3, 4) rotationsicher festgelegt wird, wodurch durch die Relativbewegung der mit den Trägerelementen (3, 4) mitrotierenden Zahnräder (8) gegenüber dem festgelegten Zahnkranz (9, 10) eine Rotation in eine erste Drehrichtung auf den Spindeltrieb (5) übertragen wird und es somit zu einer Höhenverstellung der Trägerelemente (3, 4) zueinander in die erste Verstellrichtung kommt.

17. Verfahren zur Höhenverstellung nach Anspruch 16,
**dadurch gekennzeichnet, dass** zur Höhenverstellung in eine der ersten Verstellrichtung entgegengesetzte zweite Verstellrichtung
- im Falle einer Ausgestaltung der Vorrichtung (1) mit nur einem Zahnkranz (9, 10) die Trägerelemente (3, 4) - bezogen auf deren Rotationsrichtung bei der Höhenverstellung in die erste Verstellrichtung - in die entgegensetzte Richtung rotieren und der eine Zahnkranz (9, 10) mittels der Haltevorrichtung (17) rotationsicher festgelegt wird, wodurch das Zahnrad (8) in einer zweiten Drehrichtung rotierend am Zahnkranz (9, 10) abläuft und es zu einer Höhenverstellung der Trägerelemente (3, 4) zueinander in die zweite Verstellrichtung kommt, oder
- im Falle einer Ausgestaltung der Vorrichtung (1) mit zwei Zahnkränzen (9, 10) die Trägerelemente (3, 4) - bezogen auf deren Rotationsrichtung bei der Höhenverstellung in die erste Verstellrichtung - in die gleiche Richtung rotieren und anstelle des bei der Höhenverstellung in die erste Verstellrichtung festgelegten Zahnkranzes (9, 10) der andere von beiden Zahnkränzen (9, 10) mittels der Haltevorrichtung (17) rotationsicher festgelegt wird, wodurch das Zahnrad (8) in einer zweiten Drehrichtung rotierend am festgelegten Zahnkranz (9, 10) abläuft und es zu einer Höhenverstellung der Trägerelemente (3, 4) zueinander in die zweite Verstellrichtung kommt.

## Claims

1. Apparatus (1) for rotative transport of containers, comprising a non-rotating, stationary apparatus base (15) and a rotating unit (14) that is rotatable about a vertical axis (2), comprising:
- a central drive (20) having at least one motor for rotating the rotating unit (14) which can be controlled and regulated continuously with respect to the angular position of its drive shaft and rotational speed, and for this purpose is connected to a corresponding control unit (18),
- two carrier elements (3, 4) of a transport star and/or a base plate, respectively, which are arranged one on top of the other and rotate about said axis (2), wherein at least one carrier element (3, 4) is designed to contact and/or grip the containers,
**characterised in that**
- the lower carrier element (3) is height-adjustable and the upper carrier element (4) is fixed in height, wherein
- the upper carrier element (4) has a plurality of holding elements for holding the containers by their neck ring, and **in that**
- a plurality of spindle drives (5) are arranged between the carrier elements (3, 4), each having a threaded spindle (6) and a spindle nut (7) for parallel height adjustment of one carrier element (4) relative to the other carrier element (3), wherein
- at least one gear wheel (8) is arranged on each threaded spindle (6),
- which is simultaneously in engagement with one or two sprockets (9, 10) arranged radially inside and/or outside on the gear wheel (8) in relation to the axis (2), wherein
- one or both sprockets (9, 10) is/are rotatable relative to the rotating unit (14) and/or the carrier elements (3, 4), and
- can each be held individually by means of a holding apparatus (17) fixed to the apparatus base (15), such that no rotation occurs together with the carrier elements (3, 4) and the gear wheel (8) rolls on the rotationless sprocket (9, 10).

2. Apparatus (1) for container transport according to claim 1,
**characterised in that** one or both sprockets (9, 10) is/are arranged coaxially in relation to at least one of the carrier elements (3, 4).

3. Apparatus (1) for container transport according to claim 1 or 2,
**characterised in that** the threaded spindles (6) are each mounted at one end on the lower carrier element (3) or on the upper carrier element (4).

4. Apparatus (1) for container transport according to any of the preceding claims,
**characterised in that** the threaded spindles (6) are each supported at one end on a support element (13) which rotates with the carrier elements (3, 4) and is fixed to a drive shaft (12) of the carrier elements (3, 4).

5. Apparatus (1) for container transport according to any of the preceding claims,
**characterised in that** one or both sprockets (9, 10) are driveless and are arranged so as to be freely rotatable about the vertical axis (2).

6. Apparatus (1) for container transport according to any of the preceding claims,
**characterised in that** magnets or magnetic materials are arranged on or in the one sprocket (9, 10) or at least one of the two sprockets (9, 10).

7. Apparatus (1) for container transport according to any of the preceding claims,
**characterised in that** at least one magnet is present in the gear wheel (8), which produces a latching effect, in particular through interaction with the carrier element (3) and/or the support element (13) and/or magnets arranged therein.

8. Apparatus (1) for container transport according to claim 6 or 7,
**characterised in that** the control unit (18) detects an increased torque overcoming the magnetic interaction during a movement of the two sprockets (9, 10) relative to one another and/or of the sprocket (9, 10) relative to the gear wheel (8) and thereby determines the change in the height setting of the spindle drive (5).

9. Apparatus (1) for container transport according to any of the preceding claims,
**characterised in that** the height adjustment of the carrier element (4) can be detected and controlled via the controlled rotation of the central drive (20).

10. Apparatus (1) for container transport according to any of the preceding claims,
**characterised in that** between three and eight spindle drives (5) are arranged at a distance from one another around the periphery of the carrier elements (3, 4).

11. Apparatus (1) for container transport according to any of the preceding claims,
**characterised in that** the holding apparatus (17) can be brought into force-fitting or form-fitting engagement with at least one of a plurality of holding or contact elements, such as fastening elements, bolts or screw heads (11), which are distributed at the same distance from one another around the periphery of the sprocket (9, 10).

12. Apparatus (1) for container transport according to any of the preceding claims,
**characterised in that** the holding apparatus (17) has a leaf spring which is pretensioned to a position not holding the sprocket (9, 10) and has a retaining hole for a screw head (11) of the sprocket (9, 10).

13. Apparatus (1) for container transport according to claim 12,
**characterised in that** the leaf spring is actuated pneumatically to adjust between a holding position and a position releasing the sprocket (9, 10).

14. Apparatus (1) for container transport according to any of the preceding claims,
**characterised in that** the lower carrier element (3) has a plurality of container pockets, each with a container support surface, in particular a truncated cone-shaped container support surface.

15. Container handling machine, in particular a filler, labeller or capper, with an apparatus (1) for container transport according to any of the preceding claims.

16. Method for height adjustment of an apparatus (1) for container transport, in particular according to any of the preceding claims 1-14, wherein the apparatus (1) comprises two carrier elements (3, 4) of a transport star and/or a base plate, respectively, which are arranged one on top of the other and rotate about a common axis (2), wherein the lower carrier element (3) is designed to be height-adjustable and the upper carrier element (4) to be fixed in height, wherein the upper carrier element (4) has a plurality of holding elements for holding the containers by their neck ring, wherein
- for operation of the apparatus (1) without height adjustment, one or two sprockets (9, 10) interacting with a gear wheel (8) of a spindle drive (5) arranged between the carrier elements (3, 4) for height adjustment are allowed to run unimpeded with the carrier elements (3, 4),
- for height adjustment in a first adjustment direction, the one sprocket (9, 10) or one of the two sprockets (9, 10), with rotating carrier elements (3, 4), is fixed in a rotationally secure manner by means of a holding apparatus (17), as a result of which, due to the relative movement of the gear wheels (8) rotating with the carrier elements (3, 4) with respect to the fixed sprocket (9, 10), a rotation is transmitted to the spindle drive (5) in a first rotation direction, thus causing a height adjustment of the carrier elements (3, 4) relative to one another in the first adjustment direction.

17. Method for height adjustment according to claim 16,
**characterised in that**, for height adjustment in a second adjustment direction opposite to the first adjustment direction,
- in the case of an embodiment of the apparatus (1) with only one sprocket (9, 10), the carrier elements (3, 4) - relative to their rotation direction during height adjustment in the first adjustment direction - rotate in the opposite direction and the one sprocket (9, 10) is secured against rotation by means of the holding apparatus (17), as a result of which the gear wheel (8) rotates on the sprocket (9, 10) in a second rotation direction, causing a height adjustment of the carrier elements (3, 4) relative to one another in the second adjustment direction, or
- in the case of an embodiment of the apparatus (1) with two sprockets (9, 10), the carrier elements (3, 4) - relative to their rotation direction during height adjustment in the first adjustment direction - rotate in the same direction and, instead of the sprocket (9, 10) which is fixed during height adjustment in the first adjustment direction, the other of the two sprockets (9, 10) is secured against rotation by means of the holding apparatus (17), as a result of which the gear wheel (8) rotates on the secured sprocket (9, 10) in a second rotation direction, causing a height adjustment of the carrier elements (3, 4) relative to one another in the second adjustment direction.

## Revendications

1. Dispositif (1) de transport rotatif de récipients, avec une base de dispositif (15) stationnaire non rotative et une unité de rotation (14) pouvant tourner autour d'un axe vertical (2), comprenant :
- un entraînement central (20) présentant au moins un moteur pour faire tourner l'unité de rotation (14) pouvant tourner, qui peut être commandé et régulé en continu par rapport à la position angulaire de son arbre d'entraînement et à la vitesse de rotation et qui est relié à cet effet à une commande (18) correspondante,
- deux éléments porteurs (3, 4), disposés l'un au-dessus de l'autre, tournant autour dudit axe (2), respectivement d'une étoile de transport et/ou d'une plaque de support, dans lequel au moins un élément porteur (3, 4) est réalisé pour la mise en appui et/ou la préhension des récipients,
**caractérisé en ce que**
- l'élément porteur inférieur (3) est ajustable en hauteur et l'élément porteur supérieur (4) est formé de manière fixe en hauteur, dans lequel
- l'élément porteur supérieur (4) présente plusieurs éléments de maintien pour maintenir les récipients sur leur anneau de col, et que
- plusieurs entraînements à broche (5) avec chacun une broche filetée (6) et un écrou à broche (7) pour l'ajustement en hauteur parallèle de l'un des éléments porteurs (4) par rapport à l'autre élément porteur (3) sont disposés entre les éléments porteurs (3, 4), dans lequel
- au moins une roue dentée (8) est disposée sur chaque broche filetée (6),
- qui est simultanément en prise avec une ou deux couronnes dentées (9, 10) disposées radialement à l'intérieur et/ou à l'extérieur sur la roue dentée (8) par rapport à l'axe (2), dans lequel
- l'une ou les deux couronnes dentées (9, 10) est montée/sont montées de manière rotative par rapport à l'unité de rotation (14) et/ou aux éléments porteurs (3, 4) et
- peut être maintenu/peuvent être maintenues individuellement au moyen respectivement d'un dispositif de maintien (17) fixé sur la base de dispositif (15), si bien qu'aucune rotation n'a lieu conjointement avec les éléments porteurs (3, 4) et que la roue dentée (8) roule sur la couronne dentée (9, 10) sans rotation.

2. Dispositif (1) de transport de récipients selon la revendication 1,
**caractérisé en ce que** l'une ou les deux couronnes dentées (9, 10) est disposée/sont disposées coaxialement à au moins un des éléments porteurs (3, 4).

3. Dispositif (1) de transport de récipients selon la revendication 1 ou 2,
**caractérisé en ce que** les broches filetées (6) sont montées sur une extrémité respectivement sur l'élément porteur inférieur (3) ou sur l'élément porteur supérieur (4).

4. Dispositif (1) de transport de récipients selon l'une quelconque des revendications précédentes,
**caractérisé en ce que** les broches filetées (6) sont soutenues sur une extrémité respectivement sur un élément d'appui (13) entraîné en rotation avec les éléments porteurs (3, 4), fixé sur un arbre d'entraînement (12) des éléments porteurs (3, 4).

5. Dispositif (1) de transport de récipients selon l'une quelconque des revendications précédentes,
**caractérisé en ce que** l'une ou les deux couronnes dentées (9, 10) sont formées sans entraînement et sont disposées librement en rotation autour de l'axe vertical (2).

6. Dispositif (1) de transport de récipients selon l'une quelconque des revendications précédentes,
**caractérisé en ce que** des aimants ou des matériaux magnétiques sont disposés sur ou dans une couronne dentée (9, 10) ou au moins l'une des deux couronnes dentées (9, 10).

7. Dispositif (1) de transport de récipients selon l'une quelconque des revendications précédentes,
**caractérisé en ce qu'**au moins un aimant est présent dans la roue dentée (8), lequel entraîne un effet d'encliquetage, en particulier en interaction avec l'élément porteur (3) et/ou l'élément d'appui (13) et/ou des aimants disposés à cet endroit.

8. Dispositif (1) de transport de récipients selon la revendication 6 ou 7,
**caractérisé en ce que** la commande (18) détecte un couple de rotation augmenté pour surmonter l'interaction magnétique lors d'un mouvement relatif des deux couronnes dentées (9, 10) l'une par rapport à l'autre et/ou de la couronne dentée (9, 10) par rapport à la roue dentée (8) et détermine ainsi la modification de l'ajustement en hauteur de l'entraînement à broche (5).

9. Dispositif (1) de transport de récipients selon l'une quelconque des revendications précédentes,
**caractérisé en ce que** la détection et la commande de l'ajustement en hauteur de l'élément porteur (4) peuvent être réalisées par la rotation commandée de l'entraînement central (20).

10. Dispositif (1) de transport de récipients selon l'une quelconque des revendications précédentes,
**caractérisé en ce que** entre trois et huit entraînements à broche (5) sont disposés à distance les uns par rapport aux autres sur la périphérie des éléments porteurs (3, 4).

11. Dispositif (1) de transport de récipients selon l'une quelconque des revendications précédentes,
**caractérisé en ce que** le dispositif de maintien (17) peut être amené en prise à force ou par complémentarité de forme avec au moins un parmi plusieurs éléments de maintien ou d'appui, tels que des éléments de fixation, des boulons ou des têtes de vis (11), qui sont répartis à égale distance les uns par rapport aux autres sur la périphérie de la couronne dentée (9, 10).

12. Dispositif (1) de transport de récipients selon l'une quelconque des revendications précédentes,
**caractérisé en ce que** le dispositif de maintien (17) présente un ressort à lames qui est précontraint dans une position de non-maintien de la couronne dentée (9, 10) et présente une ouverture de maintien pour une tête de vis (11) de la couronne dentée (9, 10).

13. Dispositif (1) de transport de récipients selon la revendication 12,
**caractérisé en ce que** le pilotage du ressort à lames est effectué de manière pneumatique pour l'ajustement entre une position de maintien et une position de libération de la couronne dentée (9, 10).

14. Dispositif (1) de transport de récipients selon l'une quelconque des revendications précédentes,
**caractérisé en ce que** l'élément porteur inférieur (3) présente plusieurs poches de récipient avec chacune une surface d'appui de récipient, en particulier une surface d'appui de récipient de forme tronconique.

15. Machine de traitement de récipients, en particulier remplisseuse, étiqueteuse ou capsuleuse, avec un dispositif (1) de transport de récipients selon l'une quelconque des revendications précédentes.

16. Procédé d'ajustement en hauteur d'un dispositif (1) de transport de récipients, en particulier selon l'une quelconque des revendications précédentes 1 à 14, dans lequel le dispositif (1) présente deux éléments porteurs (3, 4) disposés l'un au-dessus de l'autre, tournant autour d'un axe commun (2), respectivement d'une étoile de transport et/ou d'une plaque de support, dans lequel l'élément porteur inférieur (3) peut être ajusté en hauteur et l'élément porteur supérieur (4) est formé de manière fixe en hauteur, dans lequel l'élément porteur supérieur (4) présente plusieurs éléments de maintien pour maintenir les récipients sur leur anneau de col, dans lequel
- pour le fonctionnement du dispositif (1) sans ajustement en hauteur, une ou deux couronnes dentées (9, 10) interagissant pour l'ajustement en hauteur avec une roue dentée (8) d'un entraînement à broche (5) disposé entre les éléments porteurs (3, 4) sont laissées en rotation sans entraves avec les éléments porteurs (3, 4),
- pour l'ajustement en hauteur dans une première direction d'ajustement, la couronne dentée (9, 10) ou l'une des deux couronnes dentées (9, 10) est fixée de manière bloquée en rotation au moyen d'un dispositif de maintien (17) pour des éléments porteurs rotatifs (3, 4), ce qui permet de transférer du fait du déplacement relatif des roues dentées (8) entraînées en rotation avec les éléments porteurs (3, 4) par rapport à la couronne dentée (9, 10) fixée une rotation dans une première direction de rotation sur l'entraînement à broches (5) et ce qui donne lieu ainsi à un ajustement en hauteur des éléments porteurs (3, 4) les uns par rapport aux autres dans la première direction d'ajustement.

17. Procédé d'ajustement en hauteur selon la revendication 16,
**caractérisé en ce que** pour l'ajustement en hauteur dans une deuxième direction d'ajustement opposée à la première direction d'ajustement
- dans le cas d'une configuration du dispositif (1) avec une seule couronne dentée (9, 10), les éléments porteurs (3, 4) - par rapport à leur direction de rotation lors de l'ajustement en hauteur dans la première direction d'ajustement - tournent dans la direction opposée et une couronne dentée (9, 10) est fixée de manière bloquée en rotation au moyen du dispositif de maintien (17), ce qui permet de déplacer le pignon (8) sur la couronne dentée (9, 10) en rotation dans une deuxième direction de rotation et ce qui donne lieu à un ajustement en hauteur des éléments porteurs (3, 4) les uns par rapport aux autres dans la deuxième direction d'ajustement, ou
- dans le cas d'une configuration du dispositif (1) avec deux couronnes dentées (9, 10), les éléments porteurs (3, 4) - par rapport à leur direction de rotation lors de l'ajustement en hauteur dans la première direction d'ajustement - tournent dans la même direction et, à la place de la couronne dentée (9, 10) fixée lors de l'ajustement en hauteur dans la première direction d'ajustement, l'autre des deux couronnes dentées (9, 10) est fixée de manière bloquée en rotation au moyen du dispositif de maintien (17), ce qui permet de déplacer la roue dentée (8) en rotation dans une deuxième direction de rotation sur la couronne dentée (9, 10) fixée et ce qui donne lieu à un ajustement en hauteur des éléments porteurs (3, 4) les uns par rapport aux autres dans la deuxième direction d'ajustement.
